(19)

Europäisches
Patentamt
European
Patent Office
Office européen
des brevets

(11) **EP 4 679 722 A1**

(12) **EUROPEAN PATENT APPLICATION**

(43) Date of publication:
**14.01.2026 Bulletin 2026/03**

(21) Application number: **24306152.0**

(22) Date of filing: **09.07.2024**

(51) International Patent Classification (IPC):
**H04B 7/04** $^{(2017.01)}$

(52) Cooperative Patent Classification (CPC):
**H04B 7/04026**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Institut Mines-Telecom**
**91120 Palaiseau (FR)**

(72) Inventors:
• **REKAYA-BEN OTHMAN, Ghaya**
**91120 PALAISEAU (FR)**
• **CHENE, Thomas**
**91120 PALAISEAU (FR)**

(74) Representative: **Ipsilon**
**12 Avenue d'Italie**
**75013 Paris (FR)**

(54) **METHOD FOR OPTIMIZING THE USE OF RECONFIGURABLE INTELLIGENT SURFACES IN WIRELESS SYSTEMS**

(57)      The disclosed invention relates to a method for optimizing the use of reconfigurable intelligent surfaces in a wireless system, the system comprising at least a base station including several antennas configured to transmit to and receive data from at least one user equipment including at least one antenna, the system further comprising at least one reconfigurable intelligent surface including several reflective elements for establishing the data transmission, a channel being formed between the base station and the reconfigurable intelligent surface, and a channel being formed between the user equipment and the reconfigurable intelligent surface, said channels being function of the angle of arrival and of departure of paths between the reconfigurable intelligent surface and the base station or the user equipment, the signal at the reconfigurable intelligent surface being transformed by a matrix function of phase shifts introduced by the reconfigurable intelligent surface.

Fig. 1

**Description**

**Technical field**

The present invention relates to a method for optimizing the use of reconfigurable intelligent surfaces in a wireless system, especially in a massive antennas system.

**Prior art**

To realize the key performance indicators (KPI) of the 5G standard, technologies such as massive Multiple-Input Multiple Output (MIMO) systems entail a large number of active antennas and radiofrequency (RF) chains. However, an increase in energy consumption and hardware cost is needed. Furthermore, Millimeter-Wave (mmWave) MIMO systems are more susceptible to blockage and absorption loss in practice.

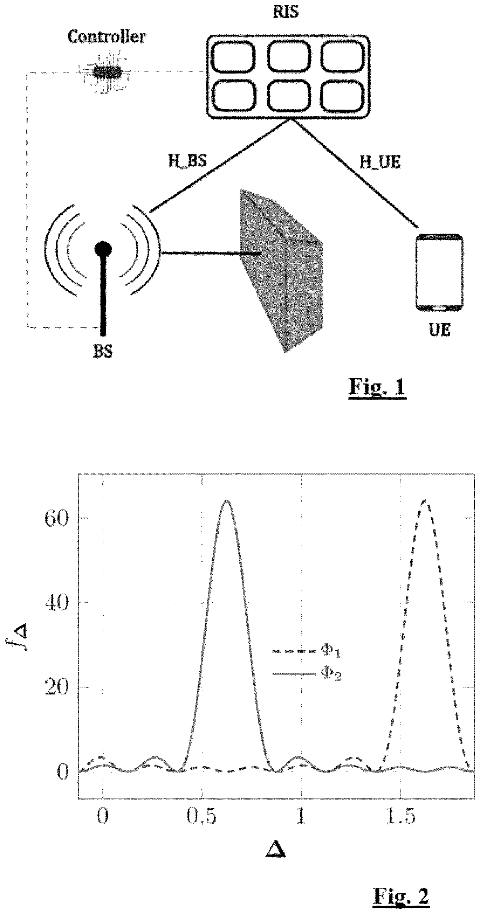

Reconfigurable intelligent surfaces (RIS) are a technology designed to modify the wireless environment in a cost-effective way. RIS are composed of a large number of passive reflecting elements that will modify the wireless propagation channel to prevent blockage, as explained in the article [1]. The RIS are envisaged to be deployed on walls, ceilings of buildings to create a line of sight (LOS) link between the user equipment (UE) and the base station (BS), as can be seen in figure 1.

The main challenge of RIS technology is to determine the optimal configuration of the reflecting elements. In known methods, schemes focus on the estimation of the overall channel between the UE and the BS and then deduce the RIS configuration. In the article [2], some of the elements of the RIS are given the ability to measure the channel.

Since one of the main advantages of RIS is the energy efficiency, other known works study fully passive RIS. A consequence of the impossibility to measure the channel at the RIS side is the increasing size of the pilots required to estimate the full channel.

Since channel acquisition for RIS systems poses formidable challenges, recent papers [3] [4] [5] study blind methods to estimate the optimal configuration of the RIS without knowledge of the channel. General theoretic guarantees are found for blind methods [5]. Optimization in a multi-user case is performed in [3]. Methods coming from classical beamforming, as described in [6], are used for RIS systems in [4]. The articles [7] and [8] describes probabilistic methods for beam alignment.

There is a need for a method to improve the efficiency of reconfigurable intelligent surfaces in wireless systems and to optimize their uses.

The present invention notably seeks to meet this need.

**Disclosure of the invention**

One subject of the invention is a method for optimizing the use of reconfigurable intelligent surfaces in a wireless system, the system comprising at least a base station including several antennas configured to transmit to and receive data from at least one user equipment including at least one antenna, the system further comprising at least one reconfigurable intelligent surface including several reflective elements for establishing the data transmission, a channel being formed between the base station and the reconfigurable intelligent surface, and a channel being formed between the user equipment and the reconfigurable intelligent surface, said channels being function of the angle of arrival and of departure of paths between the reconfigurable intelligent surface and the base station or the user equipment, the signal at the reconfigurable intelligent surface being transformed by a matrix function of phase shifts introduced by the reconfigurable intelligent surface, the method comprising at least the steps of:

i. selecting at least one codeword in a set of codewords to configure the reconfigurable intelligent surface, and select the beam emanating from the user equipment that passes through the reconfigurable intelligent surface,
ii. the matrix function of phase shifts introduced by the reconfigurable intelligent surface is set associated with said selected codeword, said user equipment sends said selected beam, and a corresponding signal (y) is received by said at least one base station,
iii. computing an *a posteriori* probability distribution of all the codewords based on said received signal (y) and previous computed probability distributions,
iv. computing a score function of said probability distributions using an acquisition function,
v. selecting the codeword having the highest score,
vi. if a stopping criterion is reached, the base station sends to the reconfigurable intelligent surface the codeword having the highest probability, or
vii. if said stopping criterion is not reached, performing again step ii.

The invention thus provides a probabilistic method with statistical learning in order to estimate the optimal phase shifts of a reconfigurable intelligent surface. The problem is formulated with a Bayesian approach and several algorithms are presented to optimize the achievable rate.

The method according to the invention, robust to white noise, allows estimating the value of phase shifts of a reconfigurable intelligent surface that maximizes the achievable rate. The method of the invention is independent of the type of codebook used, which permit to not take assumptions about the codebook.

No knowledge of the channels or the position of the user equipment is preferably known at the beginning of the method.

Base station, user equipment and reconfigurable intelligent surfaces

The stopping criterion may be based on a maximum number of codewords to be tested determined beforehand, a time duration for a loop including at least steps i to v determined beforehand, and/or a threshold on the probability distribution

In step i, said at least one codeword may be selected based on an *a priori* probability function of the channel knowledge.

In a preferred embodiment, if no channel knowledge is accessible, said *a priori* probability is uniform, and if some channel knowledge is accessible, said *a priori* probability is not uniform.

The acquisition function used to select the codeword to send to the reconfigurable intelligent surface is advantageously used to maximize the achievable rate between said at least one user equipment and the base station.

The steps i to vii may be performed for a predefined number of slots (k) dividing a timeframe composed of a pilot phase and a communication phase.

The respective channels $\mathbf{H}_{BS} \in \mathbb{C}^{M \times N}$ and $\mathbf{H}_{UE} \in \mathbb{C}^{N \times 1}$ between the base station and the reconfigurable intelligent surface, and between the reconfigurable intelligent surface and the user equipment may be expressed as:

$$\mathbf{H}^{BS} = \sum_{l=1}^{L} \lambda_l \mathbf{a}_M(\phi_{1,l}) \mathbf{a}_N^H(\phi_{2,l})$$

$$\mathbf{H}^{UE} = \sum_{l=1}^{L} \mu_l \mathbf{a}_N(\phi_{3,l}) \mathbf{a}_1^H(\phi_{4,l}) \tag{1}$$

where $a_N(\varphi)$ is the steering vector function defined as $a_N(\varphi) = [1, e^{j\pi \sin(\varphi)},...,e^{j\pi(N-1)\sin(\varphi)}]T$; $\lambda_l$ is the complex coefficient of the 1-th path between the base station and the reconfigurable intelligent surface, and $\mu_l$ *the coefficient* for the channel between the reconfigurable intelligent surface and the user equipment; $\varphi_{1,l}$ and $\varphi_{2,l}$ are the angle of arrival (AoA) and angle of departure (AoD) of the 1-th path of the channel between the base station and the reconfigurable intelligent surface. $\varphi_{3,l}$ and $\varphi_{4,l}$ are the angles for the channel between the reconfigurable intelligent surface and the user equipment.

The signal at the reconfigurable intelligent surface is advantageously linearly transformed by a diagonal matrix $\Theta$ = diag($\Phi$), with $\Phi = [e^{j\theta 0},.......,e^{j\theta N-1}]$, where the $\theta_n$ are the phase shifts introduced by the reconfigurable intelligent surface.

The full channel between the user equipment and the base station may be expressed as:

$$\mathbf{H} = \mathbf{H_{BS}\Theta H_{UE}} \tag{2}$$

The signal received at the base station may be expressed as:

$$\mathbf{y} = \sqrt{P}\mathbf{H}_{BS}\mathbf{\Theta}\mathbf{H}_{UE}S + \mathbf{w} \tag{3}$$

where P is the transmit power of the user equipment, $s \in \mathbb{C}$ (with $|s|^2 = 1$) is the signal sent by the user equipment, w ~ $CN(0, \sigma_w^2 I_M)$ is an additive white noise.

The steps i to vii may be performed to select the matrix function $\Theta$ that maximizes the achievable rate R between the user equipment and the base station, as notably expressed by:

$$\max_{\Theta}(\log_2(1 + \frac{P\|\mathbf{H}\|_2^2}{\sigma_w^2})) \tag{4}$$

To this end, the norm of the channel H is advantageously maximized:

$$\|\mathbf{H}\|_2^2 = \|\mathbf{H}_{BS}\Theta\mathbf{H}_{UE}\|_2^2$$
$$= \|\mathbf{H}_{BS}\,\mathrm{diag}(\mathbf{H}_{UE})\Phi\|_2^2 \tag{5}$$

It is advantageously assumed that there is a single dominant path in the channels (L = L' = 1).

The optimization problem may thus become:

$$\max_{\Phi}\|\mathbf{H}\|_2^2 = M|\lambda_1\mu_1\sum_{n=0}^{N-1}e^{j(\theta_n+\pi n\Delta_{1,1})}|^2 \tag{6}$$

where $\Delta_{1,1} = \sin(\varphi_{3,1}) - \sin(\varphi_{2,1})$. In practice, $\Phi = [e^{j\theta}0,......,e^{j\theta}N-1]$ belongs to a codebook **C** of finite size *C*.

Time may be divided into multiple timeframes, each of the timeframes being partitioned into $N_s$ slots. For a given timeframe, it is assumed that the parameters of the channel ($|\lambda_1\mu_1|$, $\Delta_{1,1}$) are fixed but unknown.

During each slot *k* of the first $L_s < N_s$ slots of a timeframe, the user equipment advantageously sends a pilot sequence *s* and the reconfigurable intelligent surface uses a codeword $\Phi_k$. The base station receives the signal $\mathbf{y}_k$ of equation (3), and may use a matched filter to compute the signal strength $Y_k = \mathbf{y}_k\mathbf{y}_k^H \in$ R.

The $L_s$ slots are used to configure the RIS and find the codeword that maximizes equation (5). At the end of the $L_s$ slots, the base station may give to the reconfigurable intelligent surface a codeword ΦLs.

During the remaining $N_s$ - $L_s$ slots, in a data communication phase, the codeword $\Phi_{L_s}$ found in the first phase is advantageously used. The resulting norm of the channel may be expressed as $HLs = \|\mathbf{H}_{BS}\,\mathrm{diag}(\mathbf{H}_{UE})\Phi_{Ls}\|_2^2$.

The rate of communication for the full frame may be expressed as:

$$R = \frac{N_s - L_s}{N_s}\log_2(1 + \frac{PH_{L_s}}{\sigma_w^2}) \tag{7}$$

Optimizing the use of the reconfigurable intelligent surface

As explained previously, during slot *k,* the base station advantageously computes:

$$Yk = \mathbf{y}ky kH$$
$$= P\|\mathbf{H}_{BS}\,\mathrm{diag}(\mathbf{H}_{UE})\Phi_k\|_2^2$$

$$+\sqrt{\overline{P}}\mathbf{H}_{BS}\,\mathrm{diag}(\mathbf{H}_{UE})\Phi_k s\mathbf{w}_k H$$

$$+\sqrt{P}\mathbf{w}_k(\mathbf{H}_{BS}\,\mathrm{diag}(\mathbf{H}_{UE})\Phi_k s)^H + \|\mathbf{w}_k\|_2^2 \tag{8}$$

The value of this feedback depends in particular on the unknown parameters of the channel $\Delta$ and of the codeword tested $\Phi_k$, and of the white noise $\mathbf{w}_k \sim \mathcal{CN}[0, \sigma_w^2 I_M]$. Said set of unknown parameters may be expressed as:

$$\Delta = \{\Delta_{1,1}\} \tag{9}$$

Preferably and as in [8], $|\lambda_1\mu_1|$ is assumed to be known.

A feedback function $f_\Delta(\cdot)$ may be used, taking as an input $\Phi = [e^{j\theta}0,......,e^{j\theta}N-1]$ and being expressed as:

$$f_\Delta(\mathbf{\Phi}) = P\|\mathbf{H}_{BS}\,\text{diag}(\mathbf{H}_{UE})\mathbf{\Phi}\|_2^2 \tag{10}$$

$$= MP|\lambda_1\mu_1|^2|\sum_{n=0}^{N-1} e^{j(\theta_n + \pi n\Delta_{1,1})}|^2 \tag{11}$$

This corresponds to the feedback computed by the base station in the absence of noise, it is also the strength of the channel when the codeword $\Phi$ is tested. Figure 2 shows the shape of the beams depending on the parameter $\Delta$; when $\Phi$ is fixed, $f_\Delta(\Phi)$ can be seen as a function of the parameter $\Delta$ and corresponds to the shape of the beam.

The full feedback with noise $Y_k$ may be modelled as:

$$Y_k = f_\Delta(\mathbf{\Phi}_k) + w_k \tag{12}$$

where $w_k \sim N(0,\sigma^2)$, with $\sigma^2 = M\sigma_w^2$. The invention thus models the received feedback as a noiseless function with an additive white noise. Every time a pilot sequence is sent, a feedback $Y_k$ is advantageously received, function of the codeword $\Phi_k$ that was just tested and the unknown parameters $\Delta$ of the channel.

Preferably, during a frame, the parameter $\Delta$ of the channel is fixed but unknown, while the value of $\Delta$ changes between one frame and another. No prior knowledge of $\Delta$ at the beginning of a frame may be known. $L_s$ different configurations of the reconfigurable intelligent surface are advantageously tested, corresponding to different codewords $\Phi_k$, thus providing a number $L_s$ of noisy feedbacks $Y_k$. At each time slot $k$, the results of the previous attempts are known:

$$S_{k-1} = \{\{\mathbf{\Phi}1, Y1\},...,\{\mathbf{\Phi}k-1, Yk-1\}\} \tag{13}$$

An acquisition function $A_k: (C,R)^{i-1} \dashrightarrow C$ may be used, which purpose is to determine the next codeword $\Phi_k$ to be tested, taking into account the feedback from previous attempts and expressed as:

$$\mathbf{\Phi}_k = A_k(\{\{\mathbf{\Phi}_1, Y_1\},...,\{\mathbf{\Phi}_{k-1}, Y_{k-1}\}\})$$

$$= A_k(S_{k-1}) \tag{14}$$

It is important to find the best acquisition functions that will maximize the rate after $L_s$ iterations of the adaptative method. Preferably, the parameters of the channel $\Delta$ are uniformly distributed over [0;2]:

$$\begin{array}{l}\max\limits_{A_1,...,A^{L_s}} \mathbf{E}_\Delta(f_\Delta(\mathbf{\Phi}_{Ls})) \\ \Delta \sim U([0;2])\end{array} \tag{15}$$

Preferably and as explained before, during each slot $k$ of the first $L_s$ slots of a timeframe, the feedbacks and beams tested Sk are used to update the knowledge of the channel, which may be expressed as in the following:

$$p(\Delta|\mathcal{S}_k) = p(\Delta|\mathcal{S}_{k-1}, \{\Phi_k, Y_k\})$$

$$\overset{(a)}{\propto} p(\Delta|\mathcal{S}_{k-1}, \Phi_k)p(Y_k|\mathcal{S}_{k-1}, \Phi_k, \Delta) \quad (16)$$

$$\overset{(b)}{=} p(\Delta|\mathcal{S}_{k-1})p(Y_k|\Phi_k, \Delta) \quad (17)$$

$$\overset{(c)}{=} p(\Delta|\mathcal{S}_{k-1})$$

$$\frac{1}{\sqrt{2\pi}\sigma}\exp(\frac{-(f_\Delta(\Phi_k) - Y_k)^2}{2\sigma^2}) \quad (18)$$

$$\overset{(d)}{\propto} p(\Delta)$$

$$(\frac{1}{\sqrt{2\pi}\sigma})^k \prod_{t=1}^{k}\exp(\frac{-(f_\Delta(\Phi_t) - Y_t)^2}{2\sigma^2}) \quad (19)$$

$$\overset{(e)}{=} \frac{1}{2}(\frac{1}{\sqrt{2\pi}\sigma})^k \prod_{t=1}^{k}\exp(\frac{-(f_\Delta(\Phi_t) - Y_t)^2}{2\sigma^2}) \quad (20)$$

$$\overset{(f)}{\propto} \exp(\frac{-\sum_{t=1}^{k}(f_\Delta(\Phi_t) - Y_t)^2}{2\sigma^2}) \quad (21)$$

where (a) follows from the Bayes' rule and $\propto$ denotes proportionality up to a normalization term independent of $\Delta$; (b) follows from that $\Delta$ is independent of $\Phi_k$ and that $Y_k$ is a function of $\Phi_k$ and $\Delta$; (c) follows from (12); (d) follows from recursively using (18) on $p(\Delta|Sk\text{-}1)$; (e) follows from the initial distribution of $\Delta$; (f) is just a rewriting of the previous equation and $\propto$ denotes proportionality up to a normalization term independent of $\Delta$.

Different acquisition functions may be used.

In the case where only one beam $(L_s = 1)$ can be tested, the problem that needs to be solved may be expressed as:

$$\max_{A_1} \mathbf{E}_\Delta(f_\Delta(\Phi_1))$$

The acquisition function is advantageously:

$$A_1 = \underset{\Phi \in C}{\mathrm{argmax}}\, \mathbf{E}_\Delta(f_\Delta(\Phi))$$

with $\Delta \sim u([0, 2])$

In this case, the optimal acquisition function is to test the beam that maximizes the average feedback, such a variant can be called "Likeliest Beam."

If $L_s > 1$, heuristics methods may be used.

The case $L_s = 1$ may be extended by taking the "fikeliest" codewords at each iteration:

$$A_k = \underset{\Phi \in C}{\mathrm{argmax}}\, \mathbf{E}_{\Delta|\mathcal{S}_{k-1}}(f_\Delta(\Phi)) \quad (22)$$

$$= \underset{\Phi \in C}{\mathrm{argmax}} \int_\Delta p(\Delta|\mathcal{S}_{k-1})f_\Delta(\Phi) \quad (23)$$

This method, called "likeliest beam heuristic", is greedy because the acquisition function selects the beams that are likely to maximize the feedback at each iteration $k$. Known algorithms proposed in [7],[8] develop similar greedy methods of selecting the beam with the "highest probability" for beamforming without reconfigurable intelligent surfaces, and for specific codebooks.

In a variant called "entropy", the most "informative" beams are tested first in order to obtain a good knowledge of the distribution of $\Delta|SL_s\text{-}1$. Indeed, in this case, the $L_s$-th iteration, that is to say the last one of the algorithm, should maximize $E_\Delta|SL_s\text{-}1(f_\Delta(\Phi_{Ls}))$. However, in this case, $\Delta$ is not uniformly distributed, since some knowledge have been acquired with previous feedbacks $S_{Ls}\text{-}1$. Such heuristics coming from Bayesian Optimization are known, for example as in the article [9].

For the last iteration $L_s$, the acquisition function may be expressed as:

$$ALs = \operatorname{argmax}_{\Phi \in \mathbf{C}} \mathbf{E}_{\Delta | SLs-1}(f\Delta(\mathbf{\Phi}))$$

Then, for $k < L_s$, the most "informative" codeword is advantageously chosen, which means the codeword $\Phi_k$ that will result in a feedback $Y_k$ that gives information on the parameter $\Delta$, as expressed by:

$$A_k = \operatorname{argmax}_{\Phi \in \mathbf{C}} I(Y_k, \mathbf{\Delta} | \mathbf{\Phi}_k = \mathbf{\Phi}, \mathcal{S}_{k-1}) \qquad (24)$$

The above equation may be simplified as follows:

$$I(Y_k, \mathbf{\Delta} | \mathbf{\Phi}_k = \mathbf{\Phi}, \mathcal{S}_{k-1}) = \mathcal{H}(Y_k | \mathbf{\Phi}_k = \mathbf{\Phi}, \mathcal{S}_{k-1})$$
$$- \mathcal{H}(Y_k | \mathbf{\Delta}, \mathbf{\Phi}_k = \mathbf{\Phi}, \mathcal{S}_{k-1}) \quad (25)$$
$$\stackrel{(a)}{=} \mathcal{H}(Y_k | \mathbf{\Phi}_k = \mathbf{\Phi}, \mathcal{S}_{k-1})$$
$$- \frac{ln(2\pi e\sigma^2)}{2} \qquad (26)$$

where (a) follows from the entropy of a gaussian variable and from equation (12).
The following equation needs to be maximized:

$$\mathcal{H}(Y_k | \mathbf{\Phi}_k = \mathbf{\Phi}, \mathcal{S}_{k-1}) = \int_{Y_k} \left[ p(Y_k | \mathbf{\Phi}_k, \mathcal{S}_{k-1}) \log(\frac{1}{p(Y_k | \mathbf{\Phi}_k, \mathcal{S}_{k-1})}) \right] \quad (27)$$

This may be achieved by computing:

$$p(Y_k | \mathbf{\Phi}_k, \mathcal{S}_{k-1}) \stackrel{(a)}{=} \int_{\Delta} \left[ p(\mathbf{\Delta} | \mathbf{\Phi}_k, \mathcal{S}_{k-1}) \; p(Y_k | \mathbf{\Phi}_k, \mathbf{\Delta}, \mathcal{S}_{k-1}) \right] \qquad (28)$$
$$= \int_{\Delta} p(\mathbf{\Delta} | \mathcal{S}_{k-1}) p(Y_k | \mathbf{\Phi}_k, \mathbf{\Delta}) \quad (29)$$

where (a) follows from the law of total probability. The equation (29) is similar to equation (17). Hence the update of the probability $p(\Delta | Sk)$ may be used to also determine the next codeword to test.
Each codeword may have a score that can be computed with information theoretic tools.

Wireless systems

The wireless system may be a Millimeter-Wave Multiple-Input Multiple Output (MIMO) system.
The wireless system may be a mmWave communication system with half-wave spaced uniform linear arrays. A Saleh Valenzuela geometric model, as adopted in known works [4] and [6], may be used.
The standard for transmitting information on the channels for transmitting information between the base station and the user equipment may be 5G or 6G.
Said method according to the invention is advantageously performed by means of computer programs, automatically running on any electronic device comprising a processor, as a mobile phone, a tablet, or a computer, mobile or fixe.

Computer program product

According to another aspect, the invention also relates to a computer program product for optimizing the use of reconfigurable intelligent surfaces in a wireless system, the system comprising at least a base station including several antennas configured to transmit to and receive data from at least one user equipment including at least one antenna, the system further comprising at least one reconfigurable intelligent surface including several reflective elements for establishing the data transmission, a channel being formed between the base station and the reconfigurable intelligent surface, and a channel being formed between the user equipment and the reconfigurable intelligent surface, said channels being function of the angle of arrival and of departure of paths between the reconfigurable intelligent surface and the base station or the user equipment, the signal at the reconfigurable intelligent surface being transformed by a matrix function of phase shifts introduced by the reconfigurable intelligent surface, the computer program product comprising a support and stored on this support instructions that can be read by a processor, these instructions being configured to perform the steps of the method according to any one of the preceding claims.

The features described above in relation with the method apply to the computer program product.

**Brief description of the drawings**

The invention may be better understood upon reading the following detailed description of non-limiting implementation examples thereof and upon studying the appended drawing, in which:

Figure 1, already described, is a schematic representation of a wireless system,
Figure 2 shows the shape of the beams depending on the channel parameter $\Delta$,
Figure 3 shows the probability distribution of the channel parameter $\Delta$ before and after the first tested beam,
Figure 4 depicts an algorithm of the main steps of the method according to the invention,
Figure 5 shows the effect of white noise on the performances of the method according to the invention,
Figure 6 shows the effect of unknown parameters on the performances of the method according to the invention,
Figure 7 shows a comparison of the amount of pilot needed to obtain the best possible channel strength for different algorithms and different level of noise, and
Figure 8 shows a comparison of the achievable rate for different algorithms and different type of codebooks.

**Detailed description**

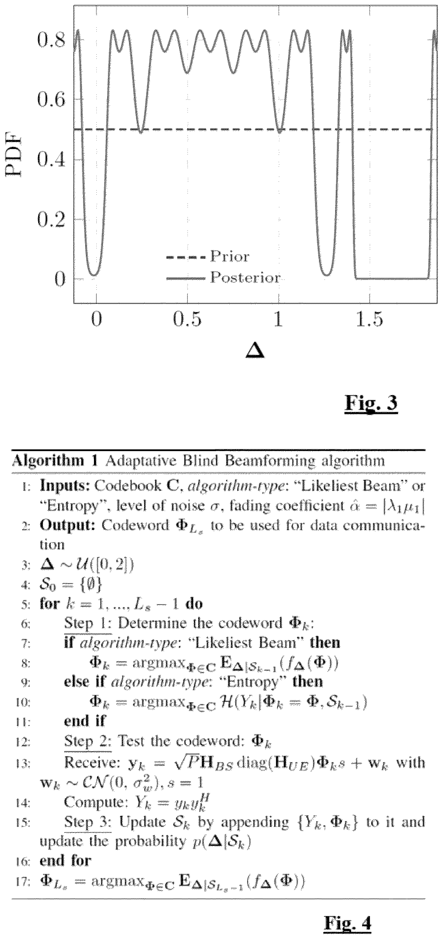

Preferably and as described above, the main steps of the method according to the invention are described in the algorithm depicted in figure 4.

To illustrate the update of the probability, we show an example in figure 3 with the prior distribution of the channel parameter $\Delta$, that is supposed to be uniform, and the posterior distribution after having tested the beam $\Phi_1$ shown in figure 2 for $Y_1 = 2.4$. One can notice that the probability that $\Delta$ takes values between 1.5 and 2 is really low, this comes from the fact that the beam shape of $\Phi_1$ covers a region (called beam coverage in [4] and [6]) around 1.5 and 2, and that the feedback Yi takes a small value in the example. Hence, it is really unlikely that the real value of $\Delta$ is between 1.5 and 2. The shape of the posterior distribution will depend on the codeword used, and we notice here that the other regions where $p(\Delta|H1)$ is small corresponds to the sidelobes of the beam $\Phi_1$.

After having updated the knowledge of the channel, another codeword $\Phi_2$ is tested. The choice of this codeword will be made with the acquisition function $A_2(\cdot)$, in this example it is in a "promising" region, where $\Delta$ takes values with high probability.

The proposed method is numerically evaluated. In the illustrated example, the number of antennas at the base station is set to M = 64, the user equipment has one antenna and the reconfigurable intelligent surface is composed of N = 100 reflective elements. The channel model is the same as in equation (1) above, with L = 1 and L' = 1.

For the different simulations, 1000 different channels are generated with parameters $\Delta_{1,1} \sim U([0,2])$ and $|\lambda_1\mu_1|^2 = \hat{\alpha}$.

As explained above, it is assumed that the real fading coefficient $\hat{\alpha}$ is known at the base station and equal to 1. This coefficient is then modeled as a random value, and it is assumed that only its mean $\alpha$ is known, for example $\hat{\alpha} \sim N(\alpha, \sigma_\alpha)$, for different $\sigma_\alpha$.

First, because no assumption is made on the codebook, the performance of the invention is tested on a random codebook and compared to an exhaustive search. Then, the algorithm is tested on a hierarchical codebook. For each of the channels, there is a best codeword $\Phi_{opt}$ that maximizes the channel strength. The performances of the different methods are evaluated by comparing how many beams need to be used, that is to say how large $L_s$ needs to be to reach the channel strength $H_{Max}$ achieved by the best possible codeword $\Phi_{opt}$.

To build the random codebook, 100 codewords $\Phi = [e^{j\theta 0}, ......., e^{j\theta N-1}]$ are generated, with $\theta_n \sim U([0,2\pi]), \forall n \in [0,$

*N*-1].

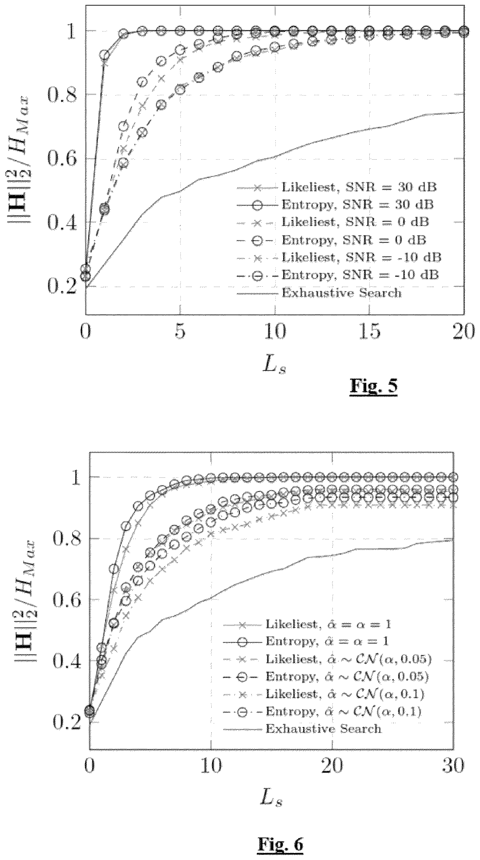

In figure 5, we compare two variants of the invention, "Likeliest Beam" and "Entropy", with the exhaustive search for different values of Signal to Noise Ratio (SNR). Since the exhaustive search tests every possible beam, it will obtain the best beam possible after 100 iterations, which corresponds to the number of beams in the codebook, with high likelihood and is negligibly affected by the noise.

Hence it is only shown the exhaustive search for a SNR of 0*dB* for readability of the curves. One can notice that for a high SNR, for both variants "Likeliest Beam" and "Entropy", it takes only 3 beams to find the optimal value of phase shifts $\Phi_{opt}$. For a lower SNR, it takes more time for the algorithm to converge to the best codeword. This can be explained as follows: because the algorithm is aware of the presence of noise, the values that are received are noisy so they should not be trusted with absolute certainty during the update of the probability function $p(\Delta)$.

In the example of figure 6, the SNR is fixed to *0dB,* but the attenuation parameter $\hat{\alpha}$ is randomly distributed around a value $\alpha$. The algorithm only knows the value $\alpha$ and tries to make the data fit its knowledge of the distribution of $f_\Delta$. The samples *Y* that are received are not distributed according to the same law as the one that was planned. Hence the performances of the algorithms suffer from it. It will no longer converge to the optimal value because the probability distribution of $p(\delta)$ does not converge.

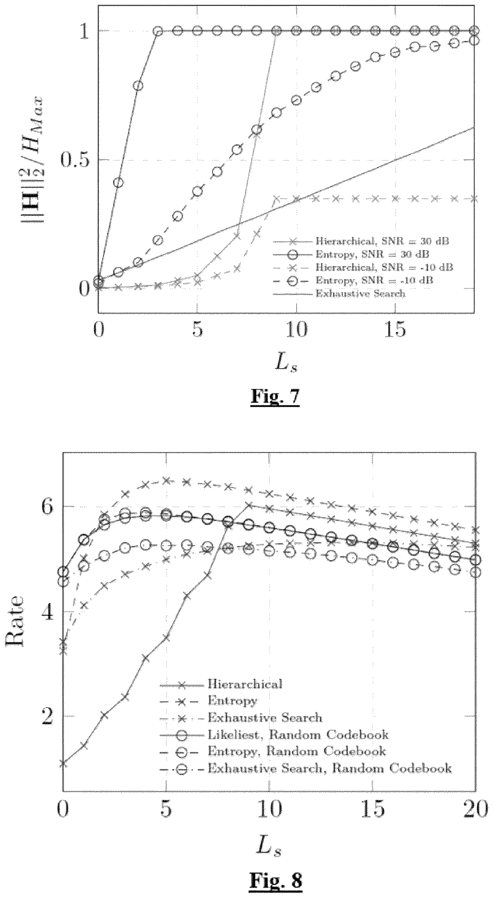

The hierarchical codebook defined in [6], and also used in [4], is used. It is composed of 62 beams of various width. Since the exhaustive search tries all of the possible narrow beams, it allows obtaining the best Received Signal Energy (RSE) possible after 32 tries, as there are $2^5$ narrow beams in the used codebook. In figure 7, are compared the performances for different SNR. One can notice that for a high SNR, a low SNR is obtained. The Exhaustive search does not perform well, while hierarchical search is sensitive to white noise. The method of the invention is however robust.

In figure 8, rates are compared. If the time for each slot is *0.1ms* and the time for a timeframe is 10ms, then $N_s$ is equal to 100 for a SNR of 0dB. The rates achieved by different codebooks are compared. For both codebooks, the method of the invention performs the best.

The algorithms according to the invention thus outperform several known methods and are robust to white noise.

Of course, the invention is not limited to the above-described embodiments.

For example, the method can be applied to massive antennas systems other MIMO. It can be in particular applied to systems using orthogonal frequency-division multiplexing (OFDM). Other applications such as automotive cars industries, massive IoT systems, wireless sensor network and multi-users MIMO are also compatible with the invention.

**List of cited references**

[1] Q. Wu and R. Zhang, "Intelligent Reflecting Surface Enhanced Wireless Network via Joint Active and Passive Beamforming," IEEE Transactions on Wireless Communications, vol. 18, pp. 5394-5409, Nov. 2019.

[2] A. Taha, M. Alrabeiah, and A. Alkhateeb, "Enabling Large Intelligent Surfaces With Compressive Sensing and Deep Learning," IEEE Access, vol. 9, pp. 44304-44321, 2021.

[3] C. You, B. Zheng, and R. Zhang, "Fast Beam Training for IRS-Assisted Multiuser Communications," IEEE Wireless Communications Letters, vol. 9, pp. 1845-1849, Nov. 2020.

[4] B. Ning, Z. Chen, W. Chen, Y. Du, and J. Fang, "Terahertz Multi-and Hybrid Beamforming," IEEE Transactions on Vehicular Technology, vol. 70, pp. 1376-1393, Feb. 2021.

[5] S. Ren, K. Shen, Y. Zhang, X. Li, X. Chen, and Z.-Q. Luo, "Configuring Intelligent Reflecting Surface With Performance Guarantees: Blind Beamforming," IEEE Transactions on Wireless Communications, vol. 22, pp. 3355-3370, May 2023.

[6] Z. Xiao, T. He, P. Xia, and X.-G. Xia, "Hierarchical Codebook Design for Beamforming Training in Millimeter-Wave Communication," IEEE Transactions on Wireless Communications, vol. 15, pp. 3380-3392, May 2016.

[7] M. Hussain and N. Michelusi, "Second-Best Beam-Alignment via Bayesian Multi-Armed Bandits," in 2019 IEEE Global Communications Conference (GLOBECOM), (Waikoloa, HI, USA), pp. 1-6, IEEE, Dec.

[8] S.-E. Chiu, N. Ronquillo, and T. Javidi, "Active Learning and CSI 0 5 10 15 Acquisition for mmWave Initial Alignment," IEEE Journal on Selected Areas in Communications, vol. 37, pp. 2474-2489, Nov. 2019.

[9] J. M. Hernandez-Lobato, M. W. Hoffman, and Z. Ghahramani, "Predictive Entropy Search for Efficient Global Optimization of Black-box Functions," June 2014.

**Claims**

**1.** Method for optimizing the use of reconfigurable intelligent surfaces in a wireless system, the system comprising at least a base station including several antennas configured to transmit to and receive data from at least one user equipment including at least one antenna, the system further comprising at least one reconfigurable intelligent surface including several reflective elements for establishing the data transmission, a channel being formed between the base station and the reconfigurable intelligent surface, and a channel being formed between the user equipment and the reconfigurable intelligent surface, said channels being function of the angle of arrival and of departure of paths between the reconfigurable intelligent surface and the base station or the user equipment, the signal at the reconfigurable intelligent surface being transformed by a matrix function of phase shifts introduced by the reconfigurable intelligent surface, the method comprising at least the steps of:

> i. selecting at least one codeword in a set of codewords to configure the reconfigurable intelligent surface, and select the beam emanating from the user equipment that passes through the reconfigurable intelligent surface,
> ii. the matrix function of phase shifts introduced by the reconfigurable intelligent surface is set associated with said selected codeword, said user equipment sends said selected beam, and a corresponding signal (y) is received by said at least one base station,
> iii. computing an *a posteriori* probability distribution of all the codewords based on said received signal (y) and previous computed probability distributions,
> iv. computing a score function of said probability distributions using an acquisition function,
> v. selecting the codeword having the highest score,
> vi. if a stopping criterion is reached, the base station sends to the reconfigurable intelligent surface the codeword having the highest probability, or
> vii. if said stopping criterion is not reached, performing again step ii.

2. Method according to claim 1, wherein the stopping criterion is based on a maximum number of codewords to be tested determined beforehand, a time duration for a loop including at least steps i to v determined beforehand, and/or a threshold on the probability distribution.

3. Method according to claim 1 or 2, wherein, in step i, said at least one codeword is selected based on an $\alpha$ *priori* probability function of the channel knowledge.

4. Method according to the preceding claim, wherein if no channel knowledge is accessible, said $\alpha$ *priori* probability is uniform, and if some channel knowledge is accessible, said $\alpha$ *priori* probability is not uniform.

5. Method according to any one of the preceding claims, wherein the acquisition function used to select the codeword to send to the reconfigurable intelligent surface is used to maximize the achievable rate between said at least one user equipment and the base station.

6. Method according to any one of the preceding claims, wherein the steps i to vii are performed for a predefined number of slots (k) dividing a timeframe composed of a pilot phase and a communication phase.

7. Method according to the preceding claim, wherein, during the remaining $N_s$ - $L_s$ slots, in a data communication phase, the codeword $\Phi_{L_s}$ found in the first phase is used, the resulting norm of the channel being expressed as $HLs = \|\mathbf{H}_{BS} \mathrm{diag}(\mathbf{H}_{UE})\Phi_{Ls}\|_2^2$, the rate of communication for the full frame being expressed as:

$$R = \frac{N_s - L_s}{N_s} \log_2(1 + \frac{PH_{L_s}}{\sigma_w^2})_.$$

8. Method according to any one of the preceding claims, wherein each codeword has a score that can be computed with information theoretic tools.

9. Method according to any one of the preceding claims, wherein no knowledge of the channels or the position of the user equipment is known at the beginning of the method.

10. Method according to any one of the preceding claims, wherein the wireless system is a mmWave communication system with half-wave spaced uniform linear arrays.

11. Computer program product for optimizing the use of reconfigurable intelligent surfaces in a wireless system, the system comprising at least a base station including several antennas configured to transmit to and receive data from at least one user equipment including at least one antenna, the system further comprising at least one reconfigurable intelligent surface including several reflective elements for establishing the data transmission, a channel being formed between the base station and the reconfigurable intelligent surface, and a channel being formed between the user equipment and the reconfigurable intelligent surface, said channels being function of the angle of arrival and of departure of paths between the reconfigurable intelligent surface and the base station or the user equipment, the signal at the reconfigurable intelligent surface being transformed by a matrix function of phase shifts introduced by the reconfigurable intelligent surface, the computer program product comprising a support and stored on this support instructions that can be read by a processor, these instructions being configured to perform the steps of the method according to any one of the preceding claims.

**Fig. 1**

**Fig. 2**

**Fig. 3**

---

**Algorithm 1** Adaptative Blind Beamforming algorithm

---

**Inputs:** Codebook $\mathbf{C}$, *algorithm-type*: "Likeliest Beam" or "Entropy", level of noise $\sigma$, fading coefficient $\hat{\alpha} = |\lambda_1 \mu_1|$

**Output:** Codeword $\mathbf{\Phi}_{L_s}$ to be used for data communication

$\mathbf{\Delta} \sim \mathcal{U}([0,2])$

$\mathcal{S}_0 = \{\emptyset\}$

**for** $k = 1, ..., L_s - 1$ **do**

    Step 1: Determine the codeword $\mathbf{\Phi}_k$:

    **if** *algorithm-type*: "Likeliest Beam" **then**

        $\mathbf{\Phi}_k = \text{argmax}_{\mathbf{\Phi} \in \mathbf{C}} \, \mathbf{E}_{\mathbf{\Delta}|\mathcal{S}_{k-1}}(f_{\mathbf{\Delta}}(\mathbf{\Phi}))$

    **else if** *algorithm-type*: "Entropy" **then**

        $\mathbf{\Phi}_k = \text{argmax}_{\mathbf{\Phi} \in \mathbf{C}} \, \mathcal{H}(Y_k|\mathbf{\Phi}_k = \mathbf{\Phi}, \mathcal{S}_{k-1})$

    **end if**

    Step 2: Test the codeword: $\mathbf{\Phi}_k$

    Receive: $\mathbf{y}_k = \sqrt{P} \mathbf{H}_{BS} \text{diag}(\mathbf{H}_{UE}) \mathbf{\Phi}_k s + \mathbf{w}_k$ with $\mathbf{w}_k \sim \mathcal{CN}(0, \sigma_w^2), s = 1$

    Compute: $Y_k = y_k y_k^H$

    Step 3: Update $\mathcal{S}_k$ by appending $\{Y_k, \mathbf{\Phi}_k\}$ to it and update the probability $p(\mathbf{\Delta}|\mathcal{S}_k)$

**end for**

$\mathbf{\Phi}_{L_s} = \text{argmax}_{\mathbf{\Phi} \in \mathbf{C}} \, \mathbf{E}_{\mathbf{\Delta}|\mathcal{S}_{L_s-1}}(f_{\mathbf{\Delta}}(\mathbf{\Phi}))$

---

**Fig. 4**

**Fig. 5**

**Fig. 6**

**Fig. 7**

**Fig. 8**

Europäisches
Patentamt

European
Patent Office

Office européen
des brevets

# EUROPEAN SEARCH REPORT

**Application Number**

**EP 24 30 6152**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG KAI ET AL: "An Expectation Maximization-aided Bayesian Beam Tracking Approach for RIS in Mobility Scenarios", 2024 IEEE INTERNATIONAL WORKSHOP ON RADIO FREQUENCY AND ANTENNA TECHNOLOGIES (IWRF&AT), IEEE, 31 May 2024 (2024-05-31), pages 242-247, XP034645139, DOI: 10.1109/IWRFAT61200.2024.10594063 [retrieved on 2024-07-18] * the whole document * | 1-11 | INV. H04B7/04 |
| T | CHENE THOMAS ET AL: "Adaptive Bayesian Method for RIS Passive Beamforming", 2024 19TH INTERNATIONAL SYMPOSIUM ON WIRELESS COMMUNICATION SYSTEMS (ISWCS), IEEE, 14 July 2024 (2024-07-14), pages 1-6, XP034679500, DOI: 10.1109/ISWCS61526.2024.10639111 [retrieved on 2024-08-23] * the whole document * | | |
| A | WANG LIU ET AL: "Low-overhead Beam Training Scheme for Extremely Large-Scale RIS in Near-field", ARXIV.ORG, CORNELL UNIVERSITY LIBRARY, 201 OLIN LIBRARY CORNELL UNIVERSITY ITHACA, NY 14853, 29 November 2022 (2022-11-29), XP091381416, * the whole document * | 1-11 | |

**TECHNICAL FIELDS SEARCHED (IPC)**

H04B

The present search report has been drawn up for all claims

| Place of search | Date of completion of the search | Examiner |
|---|---|---|
| Munich | 10 December 2024 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Q. WU** ; **R. ZHANG**. Intelligent Reflecting Surface Enhanced Wireless Network via Joint Active and Passive Beamforming. *IEEE Transactions on Wireless Communications*, November 2019, vol. 18, 5394-5409
- **A. TAHA** ; **M. ALRABEIAH** ; **A. ALKHATEEB**. Enabling Large Intelligent Surfaces With Compressive Sensing and Deep Learning. *IEEE Access*, 2021, vol. 9, 44304-44321
- **C. YOU** ; **B. ZHENG** ; **R. ZHANG**. Fast Beam Training for IRS-Assisted Multiuser Communications. *IEEE Wireless Communications Letters*, November 2020, vol. 9, 1845-1849
- **B. NING** ; **Z. CHEN** ; **W. CHEN** ; **Y. DU** ; **J. FANG**. Terahertz Multi-and Hybrid Beamforming. *IEEE Transactions on Vehicular Technology*, February 2021, vol. 70, 1376-1393
- **S. REN** ; **K. SHEN** ; **Y. ZHANG** ; **X. LI** ; **X. CHEN** ; **Z.-Q. LUO**. Configuring Intelligent Reflecting Surface With Performance Guarantees: Blind Beamforming. *IEEE Transactions on Wireless Communications*, May 2023, vol. 22, 3355-3370

- **Z. XIAO** ; **T. HE** ; **P. XIA** ; **X.-G. XIA**. Hierarchical Codebook Design for Beamforming Training in Millimeter-Wave Communication. *IEEE Transactions on Wireless Communications*, May 2016, vol. 15, 3380-3392
- Second-Best Beam-Alignment via Bayesian Multi-Armed Bandits. **M. HUSSAIN** ; **N. MICHELUSI**. 2019 IEEE Global Communications Conference (GLOBECOM), (Waikoloa, HI, USA). IEEE, 1-6
- **S.-E. CHIU** ; **N. RONQUILLO** ; **T. JAVIDI**. Active Learning and CSI 0 5 10 15 Acquisition for mmWave Initial Alignment. *IEEE Journal on Selected Areas in Communications*, November 2019, vol. 37, 2474-2489
- **J. M. HERNANDEZ-LOBATO** ; **M. W. HOFFMAN** ; **Z. GHAHRAMANI**. *Predictive Entropy Search for Efficient Global Optimization of Black-box Functions*, June 2014